# EUROPÄISCHE PATENTSCHRIFT

(11) **EP 2 604 886 B1**
(45) Veröffentlichungstag und Bekanntmachung des Hinweises auf die Patenterteilung: **03.05.2017**
(21) Anmeldenummer: 12195373.1
(22) Anmeldetag: 04.12.2012
(51) Int. Cl.: F16G 1/10, B65G 15/00, F16G 1/28, F16J 3/04, F16L 11/00

(54) **Elastischer Artikel, insbesondere Antriebsriemen**
Elastic articles, particularly drive belts
Article élastique, en particulier courroie d'entraînement

(30) Priorität: 16.12.2011 DE 102011056550; 15.05.2012 DE 102012208091
(43) Veröffentlichungstag der Anmeldung: 19.06.2013
(73) Patentinhaber: ContiTech Antriebssysteme GmbH, 30165 Hannover (DE)
(72) Erfinder: Kanzow, Dr. Henning, 30419 Hannover (DE); Teves, Dr. Reinhard, 30926 Seelze (DE); Baltes, Dr. Thomas, 30177 Hannover (DE); Mahnken, Claus-Lüder, 27367 Ahausen (DE); Greiner, Christian, 30419 Hannover (DE)
(74) Vertreter: Preusser, Andrea

(56) Entgegenhaltungen:
- DE-A1-102006 057 777
- DE-A1-102007 055 295
- GB-A- 1 025 000
- US-A- 4 745 848
- US-A1- 2008 145 583

## Beschreibung

Die Erfindung betrifft einen Artikel mit einem elastischen Grundkörper auf der Basis eines Vulkanisates mit einer verschleißanfälligen Artikeloberfläche, die mit einer Beschichtung versehen ist. Der elastische Grundkörper ist zumeist noch mit wenigstens einem eingebetteten Festigkeitsträger bzw. Zugträger versehen, der ein- oder mehrlagig ausgeführt sein kann.

Ein Artikel, der dynamischen Belastungen und somit einem Verschleiß wie auch Geräuschentwicklungen ausgesetzt ist, ist beispielsweise ein Antriebsriemen, Fördergurt oder Luftfederbalg, wobei der Antriebsriemen von besonderer Bedeutung ist. Der elastische Grundkörper des Antriebsriemens umfasst dabei eine Decklage als Riemenrücken und einen Unterbau mit einer Kraftübertragungszone. Antriebsriemen als schwerpunktmäßiger Einsatzbereich werden zur Geräuschreduzierung wie auch zur Erhöhung der Abriebsbeständigkeit insbesondere im Bereich der Kraftübertragungszone mit einer Beschichtung versehen.

Beispielsweise ist aus DE 44 00 434 A1 eine Beschichtung aus vernetztem Fluorpolymeranteil bekannt. Nachteilig ist, dass die Beschichtung auf manchen Motoren nicht dauerhaft ist, verbunden mit einem Verlust der Funktion durch Verschleiß. Außerdem reagiert der Sprühprozess empfindlich auf die Änderung von Umgebungsbedingungen (Luftfeuchte, Temperatur). Darüber hinaus behindert die Zeit für Lacktrocknung einen effizienten Herstellungsprozess. Eine Lackbeschichtung auf Acrylat- und Polyurethanbasis wird in EP 1 431 358 A1 beschrieben. Diese Beschichtung ist ebenfalls auf manchen Motoren nicht dauerhaft, verbunden mit einem Verlust der Funktion durch Verschleiß. Darüber hinaus behindert auch hier die Zeit für die Lacktrocknung einen effizienten Herstellungsprozess. Zur Geräuschreduzierung können auch Gewebe, Gewirke oder Gestricke eingesetzt werden, wie zum Beispiel in DE 10 2006 007509 A1 beschrieben. Insbesondere Gestricke und Gewirke sind anfällig für einen Durchtritt des Gummis, was Schiefstellungsgeräusche erzeugen kann. Des Weiteren sind sie aufwendig herzustellen und erzeugen damit hohe Kosten. Bei Baumwollgewirken ist der Verschleißschutz auch eher gering ausgeprägt. Ebenso sehr aufwendig und kostenintensiv ist eine Beschichtung aus einer Kautschukmischung, welche Fasern und Fluorpolymere enthält, wie sie bspw. in EP 1 396 658 A1 beschrieben ist.
Aus WO 02/084144 A1 ist bekannt, einen Zahnriemen mit einer thermoplastischen Oberflächenschicht zu versehen, wobei insbesondere PA eingesetzt wird.
In US 6,793,599 B2 und auch in US 6,609,990 B2 werden Vliesbeschichtungen vorgestellt. Klassische Vliese aus bei Vulkanisationsbedingungen nicht schmelzenden Materialien zeigen eine schlechte Abriebbeständigkeit, weswegen der Einsatz auf den Reibflächen als Verschleißschutz bei reibschlüssigen Antriebsriemen bei den meisten Anwendungen, beispielsweise beim Keilrippenriemen für KFZ-Anwendung, nicht ausreicht. Klassische Vliese sind ferner nicht ausreichend elastisch, um insbesondere das Ausformen von Keilrippenriemen im Formverfahren zu ermöglichen. Der dadurch hervorgerufene Vulkanisatdurchtritt kann das positive Geräuschverhalten verschlechtern. Vliesbeschichtungen mit zusätzlich eingelagerte Gleitmittel sind aus US 6,824,485 B2 und aus US 4,892,510 B1 bekannt. Die Nachteile, welche für die Verwendung von Vliesstoffen oben beschrieben wurden, gelten auch hierfür.
Ein Keilrippenriemen mit einem Beschichtungsfilm aus mindestens 30% Polyethylen mit geringer Dichte (LDPE) mit einem Molekulargewicht von 50000 bis 200000 g/mol wird in US 2008/0207371 A1 offenbart. Hier bestehen allerdings aufgrund des LDPE Einbußen in der Dauerhaltbarkeit.
In DE 10 2008 055 497 A1 wird ein Antriebsriemen dargestellt, bei dem die Textilschicht über einen Haftvermittler auf die Riemenoberfläche aufgebracht wird. Der Haftvermittler ist ein Kunststoff. Nachteilig ist zum einen, dass das Textil mit dem Kunststoff präpariert werden muss, zum anderen wird die Kunststoffoberfläche durch das Textil durchbrochen und bildet daher keine durchgängige Schicht.

Aus US 2010/0075793 A1 sind Antriebsriemen auf der Basis von Ethylen-Propylen-Kautschuk (EPDM) mit einer äußeren Textiloberfläche bekannt, die mit einer thermoplastischen Sperrschicht an den Grundkörper angebunden sind. Auch hier gelten gleichen Nachteile wie bereits eben erwähnt.

Aus DE102006057777A1 ist ein Antriebsriemen gemäß dem Oberbegriff des Anspruchs 1 bekannt.

Im Rahmen einer Weiterentwicklung des oben beschriebenen Standes der Technik besteht die Aufgabe der Erfindung darin, einen Artikel mit Beschichtung bereitzustellen, der sich durch eine gute bis optimierte Geräuschdämmung, insbesondere bei Geräuschen bedingt durch Schiefstellungen oder Feuchtigkeit auf der Oberfläche, auszeichnet. Gleichzeitig sollen die Leistungsübertragung des Artikels bedingt unter anderem durch einen hohen Reibbeiwert, idealerweise sollte der CoF (coefficient of friction gemäß SAEJ2432) größer oder gleich 2 sein, der Verschleißschutz und gegebenenfalls die elektrische Leitfähigkeit optimiert werden. Zusätzlich soll die Beschichtung einfach und kostengünstig im Herstellverfahren sein, ohne Einsatz von Lösemitteln.

Gelöst wird diese Aufgabe dadurch, dass wenigstens eine Oberflächenbeschichtung des Artikels aus wenigstens einer durchbrochenen Folie auf der Basis wenigstens eines thermoplastischen Kunststoffs besteht, wobei der Kunststoff derart beschaffen ist, dass dieser bei der Vulkanisation schmilzt und dabei einen festen Haftverbund von Grundkörper und Beschichtung bildet.
Der Begriff "durchbrochen" bedeutet in diesem Zusammenhang, dass die Folie Öffnungen aufweist, die auf verschiedene Art und Weise entstanden sein können. Die Folie kann zum Beispiel mit heißen oder kalten Nadeln gelocht werden. Es können alternativ auch (kleine) Schlitze geschnitten werden, die gerade oder rund sein können. Die Öffnungen können alternativ auch gestanzt werden oder durch andere Verfahren wie z.B. mit Lasern erzeugt werden. Oder aber die Öffnungen sind durch Guß- oder Spritzgußverfahren während der Herstellung entstanden.

Eine derartige Beschichtung aus einer durchbrochenen Folie auf der Basis wenigstens eines thermoplastischen Kunststoffs kommt insbesondere bei der Herstellung folgender Artikel zur Anwendung:

### Antriebsriemen

Besonders relevant ist der Antriebsriemen, der konstruktiv als Flachriemen, Keilriemen, Keilrippenriemen oder Zahnriemen ausgebildet sein kann. Sein Einsatz erstreckt sich auf den Fahrzeug- und Maschinenbau. Auch bei Aufzügen spielt er eine besondere Bedeutung. Eine zunehmend herausragende Bedeutung hat dabei der Keilriemen sowie insbesondere der Keilrippenriemen.
Besonders verschleißanfällig ist die Kraftübertragungszone, da dort der Riementrieb wirkt. Vorteilhaft ist es, wenn zumindest die Kraftübertragungszone, d.h. die Reib- oder Verschleißseite, mit einer Beschichtung versehen ist, die aus einer durchbrochenen Folie auf der Basis wenigstens eines thermoplastischen Kunststoffs besteht. Insbesondere bei Schiefstellungs- und Nassgeräuschen ergeben sich hier besondere Vorteile.
Der Riemenrücken kann gegebenenfalls ebenfalls mit dieser neuen Beschichtung versehen werden.
Bei der Endlosschließung eines Antriebsriemens kann zwischen den Stoßenden der durchbrochenen Kunststofffolie eine Lücke von 0 bis 10 mm gelassen werden. Gegebenenfalls können die Folienenden auch überlappend ausgeführt werden. Die durchbrochene Kunststofffolie kann hierbei einlagig oder mehrlagig aufgebracht werden.

### Fördergurt

Ein Fördergurt umfasst eine tragseitige und laufseitige Deckplatte, wobei sämtliche Oberflächen verschleißanfällig sind. Bei der tragseitigen Deckplatte wird der Verschleiß durch das Fördermaterial, beispielsweise durch scharfkantige Erze, sowie bei der laufseitigen Deckplatte durch die Trommeln (Antriebstrommel, Umkehrtrommel, Umlenktrommel) sowie durch die Tragrollen hervorgerufen.
Die neue Beschichtung in Form einer durchbrochenen Kunststofffolie erfasst hier vorzugsweise die tragseitige und laufseitige Deckplatte.

### Schlauch

Ein Schlauch ist ein mehrschichtiges Gebilde, umfassend eine verschleißanfällige Außenschicht und eine Innenschicht, die primär medienbeständig sein muss. Bei Transport von Gasen ist zudem eine Gasdiffusion zu verhindern. Die Verschleißanfälligkeit der Außenschicht ist insbesondere bei Großschläuchen, beispielsweise Schwimmschläuchen von Off-Shore-Anlagen, relevant. Bei einem Schlauch wird daher in der Regel ausschließlich die Außenschicht mit der neuen Beschichtung aus einer durchbrochenen Kunststofffolie ausgestattet.

### Luftfederbalg

Ein Luftfederbalg (Axialbalg, Kreuzlagenbalg) umfasst ebenfalls eine Außenschicht und Innenschicht. Dabei unterliegt die Außenschicht im Rahmen der Ein- und Ausfederung einem permanenten Verschleiß.
Die Außenschicht eines Luftfederbalges kann nun mit der neuen Beschichtung aus einer durchbrochenen Kunststofffolie ausgestattet werden.

### Mehrschichtige Stoffbahn

Eine mehrschichtige Stoffbahn dient beispielsweise zur Bildung von Schutzanzügen, Zelten, Rettungsinseln und Übergangsbälgen. Bei Schutzanzügen, Zelten, Planen und Rettungsinseln ist die Außenschicht einem Verschleiß ausgesetzt. Hier ist es ausreichend, wenn nur die Außenschicht mit der erfindungsgemäßen durchbrochenen Kunststofffolie ausgestattet wird. Bei den zumeist faltenförmigen Übergangsbälgen (Fluggastbrücken, Übergangsbälge für Bahnen und Busse) ist es dagegen von Vorteil, wenn nicht nur die Außenschicht, sondern auch die Innenschicht mit der neuen Beschichtung aus einer durchbrochenen Kunststofffolie versehen wird.

Der thermoplastische Kunststoff der durchbrochenen Folie enthält wenigstens ein Polyethylen (PE) und / oder ein Polypropylen (PP) und / oder ein Polyamid (PA). Die Verwendung wenigsten eines Polyethylens hat sich als besonders geeignet gezeigt. Alle der fachkundigen Person bekannten Polyethylene können eingesetzt werden. Insbesondere Polyethylen mit niedriger Dichte (LD-PE) oder mit hoher Dichte (HD-PE) oder mit hohem Molekulargewicht (HMW-PE) oder Polyethylen mit niedriger Dichte und linearer Struktur (LLDPE bzw. LLD-PE) oder auch Polyethylenmischungen sind gut geeignet. Besonders vorteilhaft ist die Verwendung von HDPE und / oder LLDPE.
LLDPE wird durch Copolymerisationen mit höheren Olefinen wie Buten, Hexen oder Octen hergestellt. Dadurch liegt der Erweichungsbereich von LLDPE etwas höher als der von HDPE oder LDPE, wodurch sich zusätzlich eine verbesserte Resistenz gegen Einstiche und eine höhere Festigkeit ergibt.
Insbesondere PE wird bei Verwendung eines Grundkörpers aus EPDM bei der peroxidischen Vulkanisation mitvernetzt und somit optimal an das EPDM angebunden.

Die durchbrochene Folie kann auch ein Kunststoffgemisch auf der Basis von PE, LD-PE, LLDPE, HD-PE, HMW-PE oder PP oder PA sein, beispielsweise ein HD-PE/PP-Gemisch oder ein HD-PE/PA-Gemisch, wobei der Anteil an PE, LD-PE, LLDPE, HD-PE, HMW-PE oder PP wenigstens 40 Gew.-%, insbesondere wenigstens 80 Gew.-%, beträgt. Diese Angaben beziehen sich auf die jeweilige Basiskomponente eines Kunststoffgemisches. Bildet beispielsweise in einem HD-PE/PP-Gemisch das HD-PE die Basiskomponente, dann sind die oben genannten Mengenangaben auf das HD-PE anzuwenden, beispielsweise ein Gemisch aus 85 Gew.-% HD-PE und 15 Gew.-% PP. Von besonderer Bedeutung ist jedoch der artenreine, d.h. unverschnittene, Kunststoff.

Der thermoplastische Kunststoff der durchbrochenen Folie kann auch farbig ausgebildet sein. Dadurch ist es möglich, die Oberfläche des Riemens individuell nach Kundenwunsch farbig zu gestalten. Es sind dabei alle Farben und Farbnuancen möglich.

Das Flächengewicht der durchbrochenen Kunststofffolie beträgt 0,5 bis 100 g/m², insbesondere 1 bis 40 g/m², insbesondere wiederum 5 bis 35 g/m².

Darüber hinaus besteht die Möglichkeit, in den Kunststoff der durchbrochenen Folie zusätzlich Partikel einzuarbeiten, insbesondere unter dem Aspekt der Reibbeiwertssenkung sowie der Beständigkeit gegenüber Chemikalien, Öle und Hitze. Diese Partikel können aus Silicon und/oder Polyurethan und/oder aus einem fluorhaltigen Kunststoff bestehen. Zu nennen sind als fluorhaltige Kunststoffe insbesondere Polyvinylfluorid (PVF), Polyvinylidenfluorid (PVDF) und Polytetrafluorethylen (PTFE). Von besonderer Bedeutung ist dabei PTFE. Auch Graphit oder Molybdänsulfid (MoS) kann eingemischt sein. Die Menge dieser reibbeiwertssenkenden Zusätze beträgt vorzugsweise 0.5 bis 10 Gew.-% bezogen auf das Gesamtgewicht der Folie.

Die durchbrochene Folie besitzt an den nicht durchbrochenen Stellen eine Stärke von 0,001 bis 0,15 mm, insbesondere 0,002 bis 0,08 mm, insbesondere wiederum 0,004 bis 0,04 mm.
Die Öffnungen der Kunststofffolie sind bevorzugt Lochungen, so dass es sich in einer bevorzugten Ausführungsform um eine gelochte Kunststofffolie handelt. Als Loch wird in der Regel eine kreisrunde Aussparung bezeichnet. Es ist aber auch möglich, dass die Öffnung durch elliptische oder eckige, z. B. sternförmige oder quadratische, oder anderweitige zweidimensionale bzw. in Abhängigkeit der Foliendicke auch dreidimensionale Aussparungen vorliegt. Alternativ können die Öffnungen auch gerade oder gebogene Schnitte sein. Die Öffnungen können in einer besonderen Ausführung auch so gestaltet sein, dass sie sich bei der Vulkanisation wieder schließen.
Handelt es sich bei der durchbrochenen Kunststofffolie um eine gelochte Kunststofffolie, so beträgt die Lochgröße bevorzugt 0,01 bis 3 mm, besonders bevorzugt 0,01 bis 0,5 mm. Die Lochdichte liegt dabei vorzugsweise im Bereich von 1 bis 1000 Löchern/cm².
Die Öffnungen, bevorzugt Lochung, können hierbei regelmäßig oder unregelmäßig sein. Bei einem unregelmäßigen Muster der Öffnungen, bevorzugt Lochung, ergeben sich besondere Vorteile hinsichtlich der Reduzierung des Geräuschverhaltens. Ebenso kann der Reibbeiwert über den Gesamtflächenanteil der Öffnungen, bevorzugt Lochanteil, der Folie variiert werden. Die Öffnungen, bevorzugt Lochung, begünstigen ebenso die Luftabführung während der Vulkanisation, was im Vergleich zur Verwendung von einer einfachen geschlossenen Folie einen deutlichen Vorteil darstellt. Durch die auf der Artikeloberfläche verbleibenden Öffnungen, bevorzugt Lochung, erfolgt ein Mischungsdurchtritt, wodurch die Oberfläche eine Profilierung erhält, die die Leistungsübertragung erhöht.

Ist der Grundkörper elektrisch leitfähig, so kann dadurch auch die elektrische Leitfähigkeit des Artikels, insbesondere des Antriebsriemens, durch die Öffnungen verbessert werden. Die Verwendung von Folien im Vergleich zu thermoplastisch verformbaren Vliesen ermöglicht außerdem eine konstantere Schichtdicke. Dies zeigt sich insbesondere in einer deutlich verbesserten Dauerhaltbarkeit bei dynamischer Verformung bei tiefen Temperaturen.

Der Grundkörper ist zumeist ein Vulkanisat auf der Basis einer vulkanisierten Kautschukmischung, enthaltend wenigstens eine Kautschukkomponente und Mischungsingredienzien. Als Kautschukkomponente wird insbesondere ein Ethylen-Propylen-Mischpolymerisat (EPM), ein Ethylen-Propylen-Dien-Mischpolymerisat (EPDM), (teil)hydrierter Nitrilkautschuk (HNBR), Chloropren-Kautschuk (CR), Fluorkautschuk (FKM), Naturkautschuk (NR), Styrol-Butadien-Kautschuk (SBR) oder Butadien-Kautschuk (BR) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei EPM oder EPDM oder HNBR oder ein Verschnitt der vorgenannten Kautschuktypen. Die vorgenannten Kautschuktypen kommen insbesondere bei Antriebsriemen zu Einsatz. Die Mischungsingredienzien umfassen wenigstens einen Vernetzer oder ein Vernetzersystem (Vernetzungsmittel und Beschleuniger). Weitere Mischungsingredienzien sind zumeist noch wenigstens ein Füllstoff und/oder wenigstens ein Verarbeitungshilfsmittel und/oder wenigstens ein Weichmacher und/oder wenigstens ein Alterungsschutzmittel sowie gegebenenfalls weitere Zusatzstoffe, beispielsweise Fasern und/ oder Farbpigmente. Diesbezüglich wird auf den allgemeinen Stand der Kautschukmischungstechnologie verwiesen.

Das Vulkanisat ist vorzugsweise peroxidisch vernetzt, was in Verbindung mit der Kautschukmischung der oben genannten Art etwas näher erläutert wird. Die üblichen Vulkanisationstemperaturen liegen bei 130 bis 200 °C. Der schmelzende Kunststoff der Folie, beispielsweise PE, wird durch die Peroxide mitvernetzt, wodurch ein fester Verbund zwischen der Kautschukmischung und der Folie entsteht.

In diesem Zusammenhang ist es von Vorteil, wenn die durchbrochene Folie vor der Vulkanisation 0,5 bis 5 Gew.-%, insbesondere 1 bis 4 Gew.-%, wenigstens eines Peroxides enthält. So wird die peroxidische Vernetzung der durchbrochenen Folie verstärkt.

Im Folgenden wird nun eine Versuchsreihe anhand eines Keilrippenriemens mit PE-Folie beschrieben.
Es wurden eine Reihe von Keilrippenriemenwickel (PK1070) im Formverfahren aufgebaut. Die Unterbaumischung bestand dabei jeweils aus peroxidisch vernetzten EPDM. Der Unterbau der unvulkanisierten Rohwickel wurde mit den folgenden Beschichtungen belegt: Lochfolie aus HD-PE (30 g/m² Flächengewicht, 0.5 mm Lochdurchmesser, 5 Löcher/cm²), HD-PE-Vlies 23 g/m², ungelochte HDPE-Folie 40 g/m² und ungelochte HDPE-Folie 60 g/m², ungelochte LDPE-Folie 40 g/m². Außerdem wurde ein Wickel mit einer Standardbeschichtung aus Polyurethan mit Teflon besprüht und mit Baumwollflock beschichtet.
Alle Wickel wurden vulkanisiert und 6PK-Riemen abgestochen.
Die diesbezüglichen Ergebnisse waren:
- Die PK-Rippen waren nur bei der Lochfolie, dem Vlies und der Flockbeschichtung vollständig ausgeformt.
- Es gab im Kältetest nach VDA nach 100 Starts bei -40°C nur bei der Lochfolie und der Flockbeschichtung keine Ausfälle bzw. Beschädigungen oder Anbrüche im Unterbau.
- Auf einem Dieselmotor wurden bei allen Varianten außer bei den beflockten Riemen keine unangenehme Laufgeräusche festgestellt, wenn Wasser auf die laufenden Riemen gespritzt wurde.
- Auf einem Dieselmotor mit hoher Ungleichförmigkeit wurde bei den PE beschichteten Riemen nur ein minimaler Abrieb (< 0,8% Massenverlust) nach 88 Stunden Leerlauf bei maximaler Last am Generator gefunden. Bei den beflockten Riemen betrug der Massenverlust > 1.5%.
- Im Hitzebiegewechseltest nach VDA (mit 5 Rollen statt 9 und bei konstant 130° C Kammertemperatur) wurde mit den Riemen mit Lochfolien und den Riemen mit Vlies Laufzeiten von > 200 Stunden ohne Defekte erreicht.

Eine Untersuchung mit verschiedenen PE-Typen hat ferner gezeigt, dass eine durchbrochene, bevorzugt gelochte, HD-PE-Folie die besten Eigenschaften bezüglich Geräuschen und Abriebverhalten aufweist.

Insbesondere bei einem Antriebsriemen, insbesondere wiederum bei einem Keilrippenriemen, kommen bei dem neunen Beschichtungskonzept folgende Vorteile besonders zur Geltung:

### Artikeltechnische Vorteile

- Hohe Leistungsübertragung bei gleichzeitiger Unterdrückung von Laufgeräuschen;
- Einstellbarer hoher Reibbeiwert (CoF ≥ 2) bedingt hohes Leistungsübertragungspotential und ermöglicht so die Absenkung der Vorspannung;
- Hoher Verschleißschutz und hohe Lebensdauer;
- Guter Verschleißschutz bei Staubbelastung;
- Im Vergleich zu Vliesen zeigen sich keine Materialanhäufungen, welche die Lebensdauer insbesondere beim Einsatz bei niedrigen Temperaturen (unterhalb -40° C) herabsetzen;
- Hohe Biegeermüdungsresistenz, verbunden mit einer hohen Betriebsdauer;
- Das Muster der Öffnungen, bevorzugt Lochmuster, auf den Rippen verbessert bei geeigneten Scheiben die Leistungsübertragungsfähigkeit.

### Finanzielle Vorteile

- Einsatz von sehr günstigen Folien statt teuren Vliesen oder statt teuren PU-PTFE-Beschichtungen sowie teuren Gestricken oder Geweben;
- Keine aufwendigen Fasermischungen.

### Produktionstechnische Vorteile

- Umweltfreundlich unter Verzicht von Lösemitteln;
- Rohwickel benötigen keine Ablüftzeiten;
- Keine unsicheren Lackierprozesse;
- Sehr gute Reproduzierbarkeit;
- Saubere Produktion, da kein Textilflock notwendig wie bei Lackbeschichtungen ist;
- Gute Luftabführung bei der Vulkanisation.

Die Erfindung wird nun anhand eines Ausführungsbeispiels unter Bezugnahme auf zwei schematische Zeichnungen erläutert.

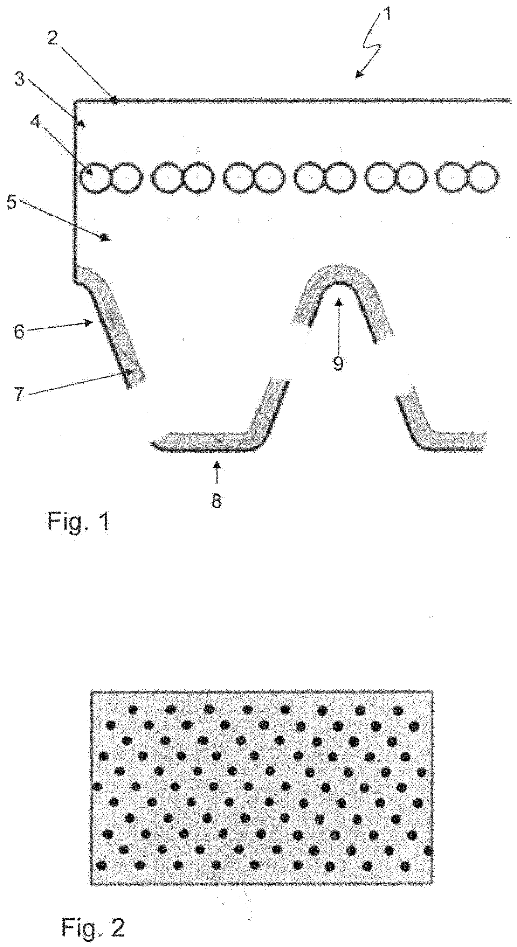

Figur 1 zeigt einen Ausschnitt aus einem Antriebsriemen 1, der als Keilrippenriemen ausgebildet ist, mit einem Riemenrücken 2 und einer Decklagen-Mischung 3, einer Festigkeitsträgerlage mit in Längrichtung verlaufenden parallel angeordneten Zugträgern 4 in Form von Einzelcorden sowie mit einem Unterbau 5. Die Decklage und der Unterbau bilden den elastischen Grundkörper auf der Basis eines Vulkanisates, beispielsweise auf der Basis von EPDM. Der Unterbau weist eine Keilrippenstruktur auf, gebildet aus Rippen 8 und Rillen 9. Der Unterbau umfasst dabei die Kraftübertragungszone 6.

Die Beschichtung 7, die hier ausschließlich die Kraftübertragungszone 6 erfasst, besteht ausschließlich aus einer gelochten PE-Folie, insbesondere einer gelochten HD-PE-Folie. Zu erkennen ist das Folienloch mit dem Mischungsdurchtritt. Die gelochte Folie wird dabei vor der Konfektion auf die Unterbaumischung aufgebracht.

Die Zugträger 4 bestehen beispielsweise aus Stahl, Polyamid, Aramid, Glasfasern, Kohlefasern, Basaltfasern, Polyethylentherephthalat (PET), Polyetheretherketon (PEEK) oder Polyethylen-2,6-naphthalat (PEN).

Die Beschichtung für den Riemenrücken 2 kann eine Gummimischung sein oder beispielsweise auch aus einer Textilauflage nach dem Stand der Technik gebildet sein.

Figur 2 eine durchbrochene Kunststofffolie in Form einer gelochten PE-Folie, wobei die Lochung regelmäßig ist.

### Bezugszeichenliste (Teil der Beschreibung)

- 1: Antriebsriemen (Keilrippenriemen)
- 2: Riemenrücken
- 3: Decklagen-Mischung
- 4: Zugträger in Form von Einzelcorden
- 5: Unterbau
- 6: Kraftübertragungszone
- 7: Beschichtung aus durchbrochener Kunststofffolie
- 8: Rillen
- 9: Rippe

## Patentansprüche

1. Artikel mit einem elastischen Grundkörper auf der Basis eines Vulkanisates mit einer verschleißanfälligen Artikeloberfläche, die mit wenigstens einer Beschichtung (7) an wenigstens einer Artikeloberfläche (2, 6) versehen ist, **dadurch gekennzeichnet, dass** wenigstens eine Oberflächenbeschichtung (7) des Artikels aus wenigstens einer durchbrochenen Folie auf der Basis wenigstens eines thermoplastischen Kunststoffs besteht, wobei der Kunststoff derart beschaffen ist, dass dieser bei der Vulkanisation schmilzt und dabei einen festen Haftverbund von Grundkörper und Beschichtung bildet.

2. Artikel nach Anspruch 1, **dadurch gekennzeichnet, dass** dieser ein Antriebsriemen (1), Fördergurt, Schlauch, Luftfederbalg oder eine mehrschichtige Stoffbahn ist.

3. Artikel mit einem elastischen Grundkörper gemäß Anspruch 1, **dadurch gekennzeichnet, dass** der Artikel ein Antriebsriemen (1) ist, umfassend einen Riemenrücken (2) und eine Decklagen-Mischung (3) und einen Unterbau (5) mit einer Kraftübertragungszone (6), wobei wenigstens die Kraftübertragungszone (6) mit der Oberflächenbeschichtung (7) versehen ist.

4. Artikel nach Anspruch 3, **dadurch gekennzeichnet, dass** dieser ein Keilriemen oder Keilrippenriemen (1) ist.

5. Artikel nach einem der Ansprüche 1 bis 4, **dadurch gekennzeichnet, dass** der Kunststoff der durchbrochenen Folie wenigstens ein Polyethylen (PE) und / oder wenigstens ein Polypropylen (PP) und / oder wenigstens ein Polyamid (PA) ist.

6. Artikel nach Anspruch 5, **dadurch gekennzeichnet, dass** der Kunststoff der durchbrochenen Folie ein Polyethylen niedriger Dichte (LDPE) oder ein Polyethylen hoher Dichte (HDPE) oder ein Polyethylen mit hohem Molekulargewicht (HMW-PE) oder Polyethylen mit niedriger Dichte und linearer Struktur (LLDPE) ist.

7. Artikel nach einem der Ansprüche 1 bis 6, **dadurch gekennzeichnet, dass** das Flächengewicht der durchbrochenen Folie 0,5 bis 100 g/m² beträgt.

8. Artikel nach einem der Ansprüche 1 bis 7, **dadurch gekennzeichnet, dass** der elastische Grundkörper ein Vulkanisat auf der Basis einer vulkanisierten Kautschukmischung ist, enthaltend wenigstens eine Kautschukkomponente und Mischungsingredienzien.

9. Artikel nach einem der Ansprüche 1 bis 8, **dadurch gekennzeichnet, dass** das Vulkanisat und / oder die durchbrochene Folie peroxidisch vernetzt ist bzw. sind.

10. Artikel nach einem der Ansprüche 1 bis 9, **dadurch gekennzeichnet, dass** die durchbrochene Kunststofffolie eine gelochte Kunststofffolie ist

11. Artikel nach Anspruch 10, **dadurch gekennzeichnet, dass** die Lochgröße 0,01 bis 3 mm beträgt.

12. Verfahren zur Herstellung eines Artikels nach einem der Ansprüche 1 bis 11, **dadurch gekennzeichnet, dass** die durchbrochene Kunststofffolie vor der Konfektionierung des Artikels auf die Mischung des Unterbaus (5) aufgebracht wird.

## Claims

1. Article having an elastic main body based on a vulcanizate having a wear-susceptible article surface having at least one coating (7) on at least one article surface (2, 6), **characterized in that** at least one surface coating (7) of the article consists of at least one apertured sheet based on at least one thermoplastic polymer, wherein the polymer is constituted such that it melts in the course of vulcanization to form a firmly adhered composite combining the main body and the coating.

2. Article according to Claim 1, **characterized in that** this article is a drive belt (1), a conveyor belt, a hose, an air spring lobe or a multilayered web.

3. Article having an elastic main body as defined in Claim 1, **characterized in that** the article is a drive belt (1) comprising a belt spine (2) and a top ply mixture (3) and a substructure (5) having a force transmission zone (6), wherein at least the force transmission zone (6) is provided the surface coating (7).

4. Article according to Claim 3, **characterized in that** this article is a v-belt or a multi-v-ribbed belt (1).

5. Article according to any of Claims 1 to 4, **characterized in that** the polymer of the apertured sheet is at least one polyethylene (PE) and/or at least one polypropylene (PP) and/or at least one polyamide (PA).

6. Article according to Claim 5, **characterized in that** the polymer of the apertured sheet is a low density polyethylene (LDPE) or a high density polyethylene (HDPE) or a high molecular weight polyethylene (HMW-PE) or a linear low density polyethylene (LLDPE).

7. Article according to any of Claims 1 to 6, **characterized in that** the basis weight of the apertured sheet is in the range from 0.5 to 100 g/m².

8. Article according to any of Claims 1 to 7, **characterized in that** the elastic main body is a vulcanizate based on a vulcanized mixture of rubber, comprising at least one rubber component and mixture ingredients.

9. Article according to any of Claims 1 to 8, **characterized in that** the vulcanizate and/or the apertured sheet is/are in a peroxidically crosslinked state.

10. Article according to any of Claims 1 to 9, **characterized in that** the apertured sheet of polymer is a holed sheet of polymer.

11. Article according to Claim 10, **characterized in that** the hole size is in the range from 0.01 to 3 mm.

12. Process for manufacturing an article according to any of Claims 1 to 11, **characterized in that** the apertured sheet of polymer is applied to the mixture of substructure (5) before the step of fabricating the article.

## Revendications

1. Article avec un corps de base élastique à base d'un produit vulcanisé avec une surface d'article soumise à l'usure, qui est munie d'au moins un revêtement (7) sur au moins une surface d'article (2, 6), **caractérisé en ce qu'**au moins un revêtement de surface (7) de l'article se compose d'au moins une feuille perforée à base d'au moins une matière plastique thermoplastique, dans lequel la matière plastique est constituée de telle manière qu'elle fonde lors de la vulcanisation et forme ainsi un composite adhérent solide du corps de base et du revêtement.

2. Article selon la revendication 1, **caractérisé en ce que** celui-ci est une courroie d'entraînement (1), une bande transporteuse, un tuyau souple, un soufflet d'amortisseur pneumatique ou une bande de matière à plusieurs couches.

3. Article avec un corps de base élastique selon la revendication 1, **caractérisé en ce que** l'article est une courroie d'entraînement (1), comprenant un dos de courroie (2) et un mélange de couches de recouvrement (3) et une carcasse (5) avec une zone de transmission de force (6), dans lequel au moins la zone de transmission de force (6) est munie du revêtement de surface (7).

4. Article selon la revendication 3, **caractérisé en ce que** celui-ci est une courroie trapézoïdale ou une courroie trapézoïdale à nervures (1).

5. Article selon l'une quelconque des revendications 1 à 4, **caractérisé en ce que** la matière plastique de la feuille perforée est au moins un polyéthylène (PE) et/ou au moins un polypropylène (PP) et/ou un polyamide (PA).

6. Article selon la revendication 5, **caractérisé en ce que** la matière plastique de la feuille perforée est un polyéthylène faible densité (LDPE) ou un polyéthylène haute densité (HDPE) ou un polyéthylène à haut poids moléculaire (HMW-PE) ou un polyéthylène à faible densité et structure linéaire (LLDPE).

7. Article selon l'une quelconque des revendications 1 à 6, **caractérisé en ce que** le grammage de la feuille perforée vaut 0,5 à 100 g/m².

8. Article selon l'une quelconque des revendications 1 à 7, **caractérisé en ce que** le corps de base élastique est un produit vulcanisé à base d'un mélange de caoutchouc vulcanisé, contenant au moins un composant de caoutchouc et des ingrédients de mélange.

9. Article selon l'une quelconque des revendications 1 à 8, **caractérisé en ce que** le produit vulcanisé et/ou la feuille perforée est ou sont réticulé(s) au peroxyde.

10. Article selon l'une quelconque des revendications 1 à 9, **caractérisé en ce que** la feuille de matière plastique perforée est une feuille de matière plastique trouée.

11. Article selon la revendication 10, **caractérisé en ce que** la grandeur des trous vaut 0,01 à 3 mm.

12. Procédé de fabrication d'un article selon l'une quelconque des revendications 1 à 11, **caractérisé en ce que** l'on dépose la feuille de matière plastique perforée sur le mélange de la carcasse (5) avant la confection de l'article.
